# FASCICULE DE BREVET EUROPEEN

(11) **EP 3 609 308 B1**
(45) Date de publication et mention de la délivrance du brevet: **23.08.2023**
(21) Numéro de dépôt: 18719961.7
(22) Date de dépôt: 11.04.2018
(51) Int. Cl.: A01B 63/111, G01B 21/04

(54) **PROCÉDÉ DE RÉGLAGE EN HAUTEUR D'UN OUTIL D'USURE ET MACHINE AGRICOLE CORRESPONDANTE**
VERFAHREN ZUR HÖHENVERSTELLUNG EINES VERSCHLEISSWERKZEUGS UND ENTSPRECHENDE LANDWIRTSCHAFTLICHE MASCHINE
METHOD FOR ADJUSTING THE HEIGHT OF A WEAR TOOL AND CORRESPONDING AGRICULTURAL MACHINE

(30) Priorité: 12.04.2017 FR 1753200
(43) Date de publication de la demande: 19.02.2020
(73) Titulaire: Kuhn SAS, 67700 Saverne (FR)
(72) Inventeur: NORTH, Julien, 67370 Wintzenheim-Kochersberg (FR); CITERNE, Sylvain, 67700 Saverne (FR); POTIER, Philippe, 67290 Zittersheim (FR)
(74) Mandataire: Esch, Esther Evelyne
(86) Numéro de dépôt international: PCT/FR2018/050904
(87) Numéro de publication internationale: WO 2018/189480

(56) Documents cités:
- EP-A1- 0 763 315
- EP-A1- 0 776 598
- DE-A1-102011 005 317
- US-A1- 2016 157 413

## Description

La présente invention se rapporte au domaine technique général du machinisme agricole et en particulier aux machines de travail du sol et de semis présentant des outils d'usure.

Dans l'exemple d'une herse rotative conventionnelle, attelée à un tracteur et dont la hauteur est ajustée manuellement, pour s'assurer de la bonne profondeur de travail de la herse, l'utilisateur doit faire travailler la machine sur une distance courte, par exemple de l'ordre de quelques mètres, descendre de son tracteur, creuser le sol travaillé et mesurer lui-même la profondeur ameublie du terrain. Pour ajuster la profondeur de travail, il doit alors régler manuellement la butée haute d'un organe de référence tel qu'un rouleau de compactage. Cette butée haute est par exemple déterminée par le placement d'une tige dans l'un des logements d'une plaque à multiples perforations. Déplacer la tige peut exiger de relever la herse, de déplacer la tige vers la perforation souhaitée, de rabaisser la herse et de contrôler la profondeur de travail tel que décrit ci-dessus. Le cas échéant, l'utilisateur peut avoir à répéter l'opération jusqu'à obtenir le réglage attendu.

Sur d'autres machines, le réglage peut être hydraulique. Un système de commande permet d'agir sur un système de réglage comportant un vérin. Un indicateur évolue sur une règle graduée en fonction de la position du vérin. L'utilisateur doit alors contrôler la profondeur de travail comme dans le cas du réglage manuel : faire travailler la machine sur une courte distance et mesurer lui-même la profondeur de travail. Ce type de réglage hydraulique ne permet pas de connaitre précisément la profondeur de travail.

L'utilisateur peut omettre le réglage de la hauteur des outils d'usure si celui-ci est trop complexe ou trop approximatif.

Il est souhaitable de maîtriser la profondeur de travail du sol pour que la préparation du lit de semence soit optimale en fonction de l'espèce à semer.

Un travail du sol à une profondeur trop importante nécessite de déplacer plus de matière que nécessaire, ce qui augmente la consommation énergétique de la machine. En outre, selon le type de sol (sablonneux, pierreux) les outils de travail du sol de machines agricoles peuvent subir une abrasion et/ou des chocs importants. L'usure des outils peut s'en trouver accélérée et la durée de vie des outils réduite.

Celle-ci peut affecter directement la qualité du semis ou de la mise en terre, et le rendement, notamment sur certaines espèces sensibles aux conditions de germination ou à la qualité du lit de semence.

Le document DE 102011005317 A1 divulgue un procédé d'étalonnage en hauteur d'un outil d'usure d'une machine agricole comportant cet outil. Le procédé décrit ne permet cependant pas de calibrer un outil en fonction de son usure d'une manière simple et précise.

L'invention a pour but de proposer un procédé d'étalonnage en hauteur d'un outil d'usure de machine agricole simplifié et amélioré. L'invention porte également sur un programme d'ordinateur pour la mise en oeuvre d'un tel procédé, et sur une machine agricole apte à mettre en oeuvre ledit procédé.

L'invention porte ainsi sur un procédé d'étalonnage en hauteur d'un outil d'usure de machine agricole, la machine agricole comportant ledit outil d'usure, le procédé comportant les étapes de :
- mise en contact de l'outil d'usure avec une surface de référence ;
- mesure de la valeur d'une variable de position liée au positionnement de l'outil d'usure lorsque l'outil d'usure est en contact avec la surface de référence ;
- détermination d'une composante verticale théorique de positionnement de l'outil d'usure en fonction de la valeur mesurée de la valeur de position, d'après une courbe de référence donnant la position verticale de l'outil en fonction de la valeur mesurée de la variable de position ;
- détermination d'une courbe de correspondance entre une composante verticale de positionnement de l'outil d'usure et la variable de position liée au positionnement de l'outil d'usure, par décalage de la courbe de référence d'une valeur égale à la composante verticale théorique déterminée précédemment.

Le procédé selon l'invention permet avantageusement de déterminer directement la composante verticale de l'outil d'usure, par exemple liée à la longueur des lames dans le cas d'une herse rotative, et liée à une hauteur jusqu'à un point de référence, ce qui simplifie l'étalonnage et limite l'intervention de l'utilisateur en lui permettant par exemple de rester à bord du tracteur lors de l'étalonnage de la profondeur de l'outil d'usure. Il en résulte également un gain en temps et en précision d'étalonnage.

L'invention porte également sur un programme d'ordinateur comportant des instructions pour la mise en oeuvre des étapes du procédé d'étalonnage en hauteur d'un outil d'usure de machine agricole ci-dessus lorsque lesdites instructions sont exécutées sur ladite machine agricole.

L'invention porte aussi sur une machine agricole comportant un outil d'usure, un organe de référence et une unité de contrôle configurée pour la mise en oeuvre du procédé d'étalonnage ci-dessus.

D'autres caractéristiques et avantages de l'invention se dégageront des exemples de réalisation non limitatifs de l'invention qui vont suivre et des dessins annexés dans lesquels :
- la figure 1 est une vue schématisée de côté d'une machine de travail du sol portant un outil de travail du sol neuf, dans une position relevée ;
- les figures 2 et 3 sont des vues de côté de la machine de la figure 1, respectivement en position d'étalonnage et en position de travail ;
- les figures 4 et 5 sont des vues de la machine de la figure 1 portant un outil de travail du sol présentant une usure, et illustrée en position d'étalonnage et en position de travail ;
- la figure 6 montre deux courbes illustrant le positionnement vertical de l'outil de travail du sol en fonction de : une courbe de référence et une courbe de correspondance issue de la courbe de référence ;
- la figure 7 est un diagramme montrant une succession d'étapes du procédé d'étalonnage selon l'invention à l'exemple de la machine des figures 4 et 5 ;
- les figures 8 et 9 montrent deux modes de réalisation alternatifs à la machine de travail du sol des figures 1 à 5, en position d'étalonnage.

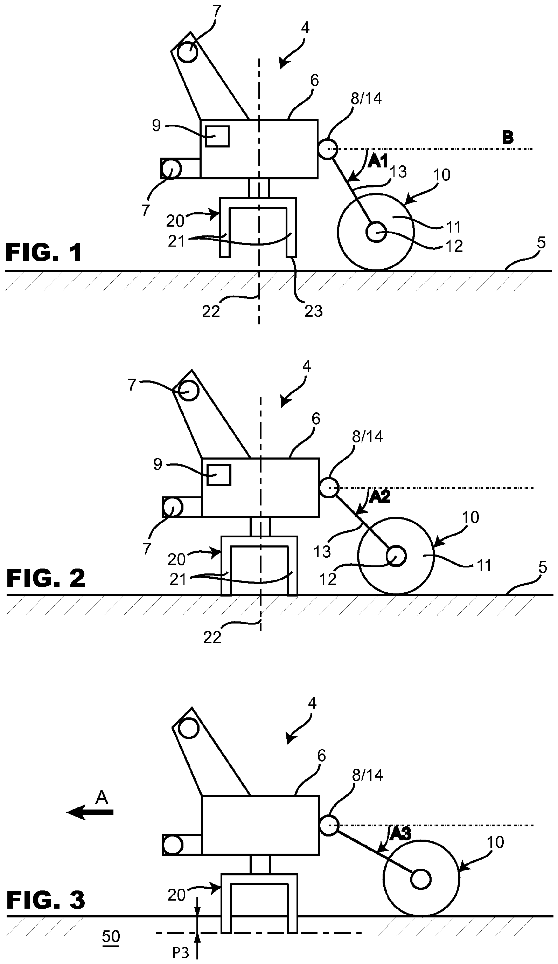

La figure 1 illustre un exemple de machine agricole 4 de travail du sol dans une position relevée, par exemple antérieure à un procédé d'étalonnage. La machine agricole 4 comporte un bâti 6, une unité de contrôle 9, un organe de référence 10 et un outil d'usure 20, tel qu'un outil de travail du sol. L'organe de référence 10 est monté articulé à l'arrière du bâti 6. L'outil d'usure 20 s'étend sous le bâti 6, ici verticalement. La machine 4 est ici, non limitativement, de type herse rotative.

En figure 1, l'organe de référence 10 est posé sur une surface de référence 5 alors que le bâti 6 est maintenu en l'air par un véhicule tel qu'un tracteur (non représenté) auquel la machine 4 est attelée.

En figure 2, la machine 4 est illustrée en position d'étalonnage, l'outil d'usure 20 étant également au contact d'une surface de référence 5 qui est ici la même que celle sur laquelle est posé l'organe de référence 10.

En figure 3, la machine 4 est illustrée en une position de travail. L'outil d'usure 20 a partiellement pénétré dans le sol 50, qui est par exemple le terrain agricole à travailler.

Dans l'exemple des figures 1 et 2, la surface de référence 5 peut être non limitativement le terrain agricole 50 mentionné ci-dessus, ou encore un chemin, une surface bétonnée, etc. L'inclinaison de la surface de référence 5 est de préférence faible, par exemple inférieure à 10%, préférentiellement inférieure à 5%. La surface de référence 5 est par exemple une surface plane, ferme et horizontale. Le bâti 6 présente des points d'attache 7 à l'avant, et ici deux pivots 8 à l'arrière. Les points d'attache 7 sont destinés à être accrochés au dispositif d'attache du véhicule auquel la machine 4 est accrochée, par exemple un dispositif d'attache en trois points d'un tracteur.

Dans le mode de réalisation représenté, un capteur de position, qui est ici un capteur d'angle 14, est prévu sur l'un des pivots 8, par exemple entre le bâti 6 et l'organe de référence 10. Le capteur d'angle 14 mesure l'angle A entre un plan de référence B (voir fig.1 préférentiellement un plan horizontal tel que la surface de référence 5, ou une parallèle à la surface de référence) et un support mobile 13 de l'organe de référence 10.

L'unité de contrôle 9 appartient ici à la machine 4, par exemple au bâti 6 tel qu'en figure 1. L'unité de contrôle 9 est configurée pour opérer au moins les calculs de correspondance entre variables.

L'organe de référence 10 est ici un rouleau de travail du sol. Ce rouleau peut être, non limitativement, un rouleau de compactage ou d'émiettement. Le rouleau 10 tel qu'illustré présente un corps cylindrique 11, deux pivots 12 et deux supports 13. Le corps cylindrique 11 est monté en ses extrémités aux supports 13 via les pivots 12. Les supports 13 sont eux-mêmes montés à rotation sur le bâti 6 par l'intermédiaire des pivots 8. L'organe de référence 10 peut donc se déplacer en rotation relativement au bâti 6. Le corps cylindrique 11 est destiné à être déposé sur la surface de référence 5 tel qu'en figure 1. Le capteur d'angle 14 peut détecter un premier angle A1 correspondant à la position de l'organe de référence 10 lorsque la machine 4 est en position relevée, ni l'outil d'usure 20, ni l'organe de référence 10 n'étant en contact avec la surface 5, cet angle A1 restant préférentiellement constant tant que l'organe de référence 10 est en butée basse, c'est-à-dire jusqu'à la venue de l'organe de référence 10 au contact de la surface 5 tel qu'illustré en figure 1.

L'outil d'usure 20 est ici une paire de dents 21 ou lames, disposées en fourches. La herse rotative de l'exemple est pourvue d'une série de telles fourches, dont seule une est représentée et décrite par souci de simplification. Chaque fourche est montée sur un rotor mobile en rotation autour d'un axe vertical 22. L'outil d'usure 20 sert ici à préparer le lit de semence en brisant les mottes de terre et en émiettant le sol. L'outil d'usure 20 est ici monté solidairement du bâti 6, c'est-à-dire qu'un déplacement en hauteur du bâti 6 aura pour conséquence le déplacement en hauteur de l'outil d'usure 20 d'une même valeur.

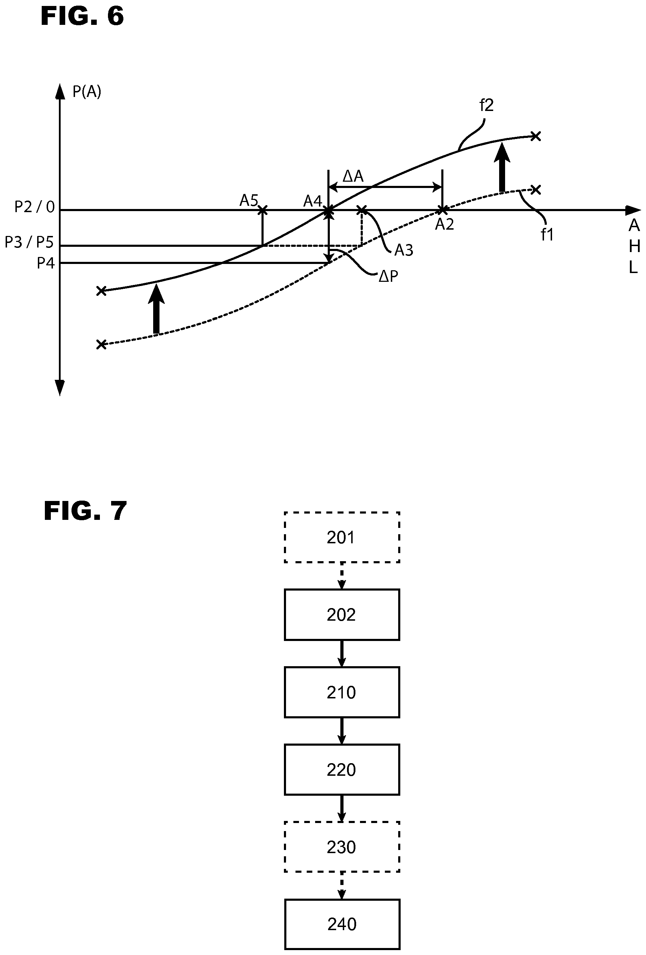

La figure 6 montre deux courbes f1 et f2. Les courbes f1 et f2 de la figure 6 représentent la relation entre la position verticale P(A) des outils d'usure 20 et 120 respectivement et l'angle A mesuré par le capteur 14. Toutefois, ces courbes f1 et f2 ont une valeur purement illustrative et ne sauraient servir telles quelles de support d'étalonnage en hauteur. La position verticale P(A) est préférentiellement celle d'un, voire du, point inférieur 23 de l'outil d'usure 20 ou 120 concerné. Le terme « courbe » est à comprendre au sens large et peut inclure au moins une liste de valeur, interrompue ou continue, extrapolée ou non. Les courbes sont préférentiellement comprises entre deux bornes inférieures et supérieures qui correspondent à des limites physiques de la machine, telles qu'une butée basse et la butée la plus haute de l'organe de référence 10.

La courbe f1 est un exemple de courbe de référence sauvée en mémoire de l'unité de contrôle 9. La courbe de référence f1 peut être une courbe préenregistrée fournie par le constructeur, par exemple donnant la position verticale (c'est-à-dire hauteur ou profondeur) de l'outil neuf 20 en fonction de la position du rouleau 10 mesurée par le capteur 14, ou être issue d'un étalonnage précédent par décalage d'une courbe de référence alors que l'outil 20 était dans un état usé antérieur ou à l'état neuf.

La courbe f2 est un exemple de courbe de correspondance obtenue à partir de la courbe f1 et d'étapes d'étalonnage décrites plus loin.

La figure 2 illustre la machine 4 posée sur la surface de référence 5, en position d'étalonnage. Par rapport la position relevée de la figure 1, la machine 4 a été abaissée et l'extrémité inférieure 23 de l'outil d'usure 20, c'est-à-dire que les dents 21 dans le cas illustré, sont également au contact du sol. L'organe de référence 10 est donc remonté par rapport au bâti 6 et à l'outil d'usure 20, et le capteur 14 mesure un angle A2 inférieur à l'angle A1. Avec l'outil d'usure 20 neuf, l'angle A2 est la valeur théorique à laquelle la courbe f1 devrait couper l'axe des abscisses (voir figure 6).

La figure 3 illustre la machine 4 dans un exemple de position de travail dans laquelle elle est abaissée encore par rapport à sa position illustrée en figure 2. L'outil d'usure 20 a alors partiellement pénétré dans le sol 50 d'une profondeur P3. L'angle A3 mesuré par le capteur est ici inférieur à l'angle A2 dans la mesure où le bâti 6 est descendu par rapport à l'organe de référence 10, c'est-à-dire que le corps 11 s'est rapproché du plan horizontal B.

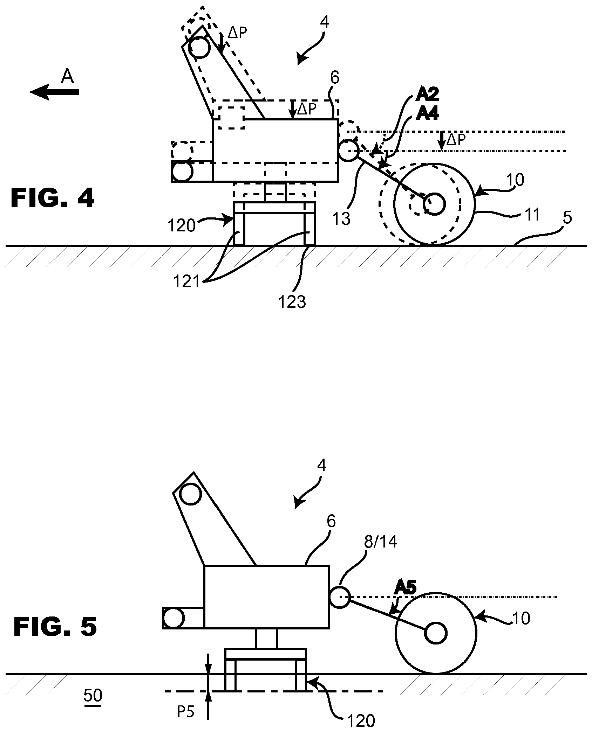

La figure 4, par analogie à la figure 2, illustre la machine 4 en position d'étalonnage avec un outil de travail du sol 120 du même type que l'outil 20, mais dans un état usé. Les dents 121 de l'outil 120 sont alors de longueur inférieure à la longueur des dents 21 de l'outil 20. Cette différence de longueur se répercute dans la hauteur de chaque composant du bâti 6 par rapport à la surface 5, mais aussi dans la valeur de l'angle entre le support 13 et l'horizontale : l'angle A4 mesuré par le capteur 14 dans la position de la figure 4 est inférieur à l'angle A2. Pour faciliter la compréhension de la figure 4, la machine 4 dans la position de la figure 2 y est représentée en pointillés.

La figure 5 illustre la machine 4 portant l'outil de travail du sol 120, la machine 4 étant cette fois-ci en position de travail. L'outil d'usure 120 a alors partiellement pénétré dans le sol 50 d'une profondeur P5. Dans l'exemple illustré, l'angle A5 mesuré par le capteur de position 14 est inférieur à l'angle A4 en valeur dans la mesure où le bâti 6 est descendu encore par rapport à l'organe de référence 10. Cette position de travail est par exemple issue d'une étape de réglage qui suit un étalonnage selon le procédé d'étalonnage décrit ci-après.

Le procédé d'étalonnage de la position verticale P(A) de l'outil d'usure 120 illustré aux figures 4 et 5, peut se dérouler de la façon suivante :
- abaissement de la machine 4, jusqu'à ce que d'une part l'organe de référence 10 (étape 201) et d'autre part un point inférieur 123 de l'outil
- d'usure 120 (étape 202) soient au contact de la surface de référence 5 (figures 4, 7);
- mesure de la valeur A4 du paramètre de position A de l'organe de référence 10 dans la position atteinte par la machine 4 qui est la position d'étalonnage (figure 4 ; étape 210) ;
- détermination de la composante verticale théorique P4 (ou hauteur théorique) du point inférieur de l'outil d'usure 120 en fonction de la valeur mesurée A4 du paramètre de position A, d'après la courbe de référence f1 (étape 220);
- détermination de la différence de hauteur ΔP entre la hauteur théorique P4 et la surface de référence 5 (étape 230) ;
- détermination d'une courbe de correspondance f2 entre la position de l'organe de référence 10 et la position de l'outil d'usure 120 par décalage de ΔP de la courbe de référence f1 (étape 240).

Dans le cas de la machine 4 illustrée aux figures 1 à 5, comportant une herse rotative et un rouleau de travail du sol, l'organe de référence 10 est monté articulé sur le bâti 6. L'abaissement de l'organe de référence 10 et de l'outil d'usure 120 (ou de l'outil 20, par analogie) commence alors simultanément et se poursuit jusqu'au contact de l'organe de référence 10 sur la surface 5. L'outil d'usure 120 continue alors de s'abaisser avec le bâti 6 jusqu'au contact de l'outil 120 sur la surface 5. En d'autres termes, l'organe de référence 10 est ici déposé sur la surface 5 avant l'outil d'usure 120.

La mesure d'un paramètre de position tel que l'angle A permet de déterminer le décalage ΔP entre une hauteur théorique P2 ou P4 de l'outil d'usure 120 selon la courbe de référence f1 et la position réelle de cet outil 120 dans son état d'usure courant. Il est ainsi possible de définir une courbe de correspondance f2 par décalage d'une valeur ΔP vers le haut de la courbe de référence f1 (voir figure 6). Puisque l'outil 120 repose sur la surface de référence 5 lors d'étalonnage, il est préférentiellement assigné une hauteur 0 à la surface de référence 5 et ΔP est égal en valeur absolue à la hauteur théorique, ici P4, de l'outil d'usure 120 sur la courbe f1 pour la valeur mesurée du paramètre de position A4. L'étape 230 est donc optionnelle.

A partir de la courbe de correspondance f2 obtenue, la hauteur P(A) de l'outil d'usure 120 peut être contrôlée précisément, non seulement à l'étalonnage mais aussi au travail, par exemple à partir de l'organe de référence 10.

Il est ainsi possible d'ajouter au procédé d'étalonnage les étapes de réglage suivantes :
- saisie d'une hauteur de travail Pn souhaitée (c'est-à-dire une profondeur) ;
- détermination de la valeur An de la variable de position de l'organe de référence correspondant à la profondeur Pn d'après la courbe de référence f2 ;
- changement de hauteur de l'outil d'usure 120 (ou du bâti 6) jusqu'à ce que l'organe de référence 10 atteigne la position An.

La position An de l'organe de référence prévue pour le travail est par exemple A3 ou A5 (figures 3 ou 5 respectivement). L'unité de contrôle 9 sait alors que l'outil d'usure 120 a atteint la profondeur souhaitée.

Par analogie, ce procédé d'étalonnage peut être mis en oeuvre avec l'outil d'usure neuf 20, par exemple dans le but de compenser les jeux dus à l'assemblage ou d'autres outils d'usure (disque ouvreur, lames fixes, socs, disques droits, disques bombés, disques ondulés, disques creux ou de toute forme, fraise rotative, etc.).

En variante non illustrée, l'outil d'usure 20 ou 120 touche la surface de référence avant l'organe de référence 10. Une fois l'outil d'usure 20 ou 120 au contact de la surface de référence 5, l'organe de référence 10 est abaissé de façon contrôlée, par exemple hydrauliquement.

Le procédé d'étalonnage peut également être mis en oeuvre sur la machine 4 portant un outil neuf.

En variante non illustrée, l'outil d'usure est un outil rotatif autour d'un axe transversal à un axe vertical, c'est-à-dire horizontal ou incliné à un angle par exemple inférieur à 45 degrés de l'horizontale. Il peut s'agir par exemple d'un disque ouvreur, d'un disque de toute autre forme ou structure, d'une fraise rotative.

La machine agricole 4 peut comporter un dispositif d'affichage non représenté permettant de communiquer à l'utilisateur l'usure de l'outil 20 ou 120. Le dispositif d'affichage peut par exemple se présenter sous forme d'une série de DEL (diodes électroluminescentes) ou d'un écran. Une étape d'estimation et/ou d'affichage de la profondeur maximale et/ou de la durée de vie restante de l'outil d'usure 20 peut être prévue.

Alternativement au capteur d'angle 14 ou en plus de celui-ci, au moins un capteur de position d'un autre type est prévu pour mesurer toute variable de position susceptible d'évoluer lors d'un déplacement relatif entre le bâti 6 et l'organe de référence 10. Il peut s'agir d'un capteur d'élongation disposé entre le bâti 6 et le support 13. Ce capteur d'élongation mesure alors une variation de longueur L entre un point du bâti 6 et un point de l'organe de référence tel qu'un support 13.

En variante non représentée, l'unité de contrôle 9 peut se trouver dans le véhicule auquel la machine est attelée, par exemple être un boîtier de commande, ou se trouver dans un boîtier de commande. En variante encore, l'unité de contrôle 9 appartient à une machine distincte que l'on combine avec la machine agricole 4 et depuis laquelle cette dernière est contrôlée. Plus généralement, la machine 4 et l'unité de contrôle 9 appartiennent à un même système agricole. L'unité de contrôle 9 peut donc soit appartenir à la machine agricole 4, soit à un élément extérieur.

En variante, l'organe de référence 10 peut être une roue d'appui au travail ou au transport.

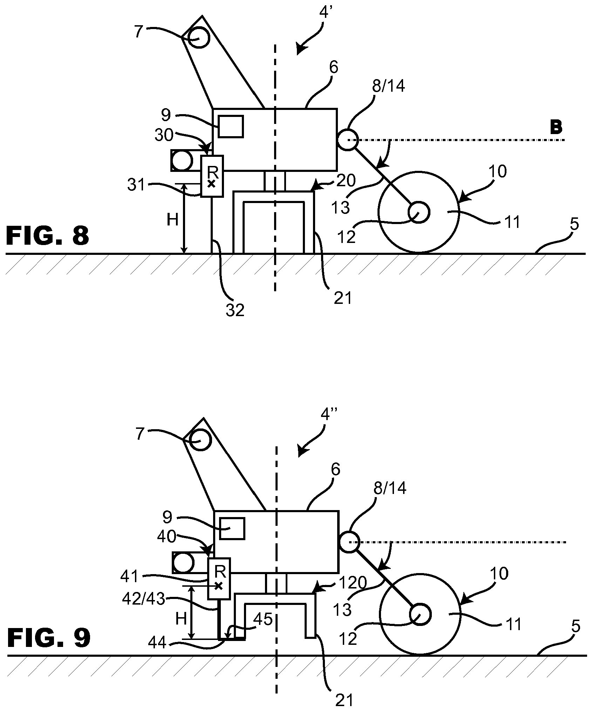

En figures 8 et 9, deux autres machines agricoles 4' et 4" sont illustrées dans lesquelles le procédé d'étalonnage général ci-dessus peut s'appliquer. La variable de position mesurée est ici une hauteur H d'un point de référence R fixe par rapport au bâti 6. Sur ces figures, les éléments analogues portent les mêmes références numériques que précédemment.

En figure 8, la machine 4' comporte un organe de télémesure 30, ici un organe de mesure par laser (ou télémètre laser) représenté par un boîtier 31 et un rayon 32. Alternativement, un autre type d'organe de télémesure est envisageable tel qu'un organe de mesure par ultrasons (ou télémètre ultrasons, non illustré).

En figure 8, la mesure de la valeur H se fait au moyen du rayon laser vertical 32. La méthode de mesure peut inclure la mesure de la durée de retour du rayon 32, le décalage de phase, etc.

En figure 9, la machine 4" comporte un organe de mesure par contact 40, ou palpeur. Le palpeur 40 comporte par exemple un boîtier 41 et un bras 42. Le bras 42 présente ici une partie support 43 et une partie de contact 44. Lorsque la machine est placée sur un sol horizontal, les parties 43 et 44 sont ici respectivement verticale et horizontale. La partie support 43 est montée en une première extrémité dans le boitier 41, mobile au moins à translation selon son axe longitudinal propre et à rotation autour de celui-ci. La partie de contact 44 s'étend transversalement à une extrémité distale de la partie 43 opposée à la première extrémité. Une surface de référence 45 est prévue sur la face supérieure de la partie 44. La surface de référence 45 contre laquelle l'outil d'usure vient en contact est donc ici distincte du sol.

La mise en contact de l'outil d'usure avec la surface de référence 45 (étape 202) s'effectue par descente du bras 42 par rapport au bâti 6, puis rotation et remontée de celui-ci de manière à placer le point inférieur 23 de l'outil d'usure 120 contre la surface de référence 45. La partie de contact 44 peut être dimensionnée pour couvrir tout l'espace entre le bras 43 et l'axe 22 de manière à garantir le contact entre un point inférieur 23 de l'outil d'usure 20 ou 120.

Dans les exemples des figures 8 et 9, la hauteur H pour l'étalonnage est mesurée par rapport à un point de référence R des boîtiers 31 ou 41. Il est ensuite utile, au travail, de disposer d'un organe de référence dynamique tel que le rouleau 10 pour garantir la profondeur de travail de l'outil d'usure.

Plus généralement, le procédé d'étalonnage peut généralement se limiter aux étapes de :
- mise en contact d'un point inférieur de l'outil d'usure avec une surface de référence (étape 202) ;
- mesure automatique de la valeur d'une variable de position liée au positionnement de l'outil d'usure (étape 210) lorsque le point inférieur de l'outil d'usure est en contact avec la surface de référence ;
- détermination de la composante verticale théorique de positionnement de l'outil d'usure en fonction de la valeur mesurée, d'après une courbe de référence f1 (étape 220) ;
- détermination d'une courbe de correspondance f2 entre une composante verticale de positionnement de l'outil d'usure et la variable de position liée au positionnement de l'outil d'usure, par décalage de la courbe de référence f1 d'une valeur ΔP égale à la composante verticale théorique déterminée précédemment (étape 240).

On comprendra que la machine 4, 4' ou 4" est d'abord placée dans une position d'étalonnage dans laquelle l'outil d'usure 20 ou 120 est au contact d'une surface de référence 5 ou 45 qui est selon les modes de réalisation la même ou non que la surface de référence 5 sur laquelle l'organe de référence 10 est posé.

Selon que la surface de référence 5 est meuble ou non, un paramètre complémentaire d'ajustement C peut être ajouté pour compenser l'enfoncement de l'organe de référence 10. Par exemple, dans le cas d'un rouleau de compactage, le corps cylindrique peut être pourvu de dents réparties de façon homogène sur toute sa surface, saillant d'une distance radiale C. Sur une surface meuble, les dents s'enfonceront jusqu'à ce que la surface du corps vienne en contact avec la surface meuble. Le procédé devra alors inclure une étape d'addition d'un facteur de correction C de la composante verticale P de positionnement.

De ce qui précède, on comprendra que le terme « variable de position » peut désigner :
- un allongement ou un déplacement angulaire dans le cas d'une mesure par rapport à un organe de référence par contact au sol de type rouleau, roues (roue d'appui au travail ou au transport, roue d'entrainement de type roue soleil ou roue squelette), etc. ;
- une hauteur brute mesurée entre un point de référence pris par exemple sur le bâti et le sol tel que dans le cas des capteurs optiques ;
- une hauteur brute entre un point de référence pris par exemple sur le bâti et un palpeur.

La variable de position étudiée est alors liée directement (dans l'exemple des capteurs optiques et du palpeur) ou indirectement (dans l'exemple des organes de référence par contact au sol) au positionnement de l'outil d'usure.

## Revendications

1. Procédé d'étalonnage en hauteur d'un outil d'usure (20 ; 120) de machine agricole, la machine agricole comportant ledit outil d'usure (20 ; 120), le procédé comportant les étapes de :
- mise en contact de l'outil d'usure (20 ; 120) avec une surface de référence (5 ; 45);
- mesure de la valeur (A2 ; A4) d'une variable de position liée au positionnement de l'outil d'usure (étape 210) lorsque l'outil d'usure (20 ; 120) est en contact avec la surface de référence (5 ; 45) ;
- détermination d'une composante verticale théorique (P2 ; P4) de positionnement de l'outil d'usure (20 ; 120) en fonction de la valeur mesurée de la variable de position (A2 ; A4), d'après une courbe de référence (f1) donnant la position verticale de l'outil (20) en fonction de la valeur mesurée de la variable de position;
- détermination d'une courbe de correspondance (f2) entre une composante verticale (P(A)) de positionnement de l'outil d'usure (20 ; 120) et la variable de position (A ; L ; H) liée au positionnement de l'outil d'usure (20 ; 120), par décalage de la courbe de référence (f1) d'une valeur (ΔP) égale à la composante verticale théorique déterminée précédemment (P2 ; P4) (étape 240).

2. Procédé selon la revendication précédente, dans lequel la machine agricole comporte un organe de référence (10) destiné à venir au contact de la surface de référence (5), la surface de référence étant le sol (5).

3. Procédé d'étalonnage selon l'une des revendications précédentes comportant une étape de dépose de l'organe de référence (10) sur la surface de référence (5).

4. Procédé d'étalonnage selon l'une des revendications 2 et 3, l'organe de référence comporte un rouleau de travail du sol (10), une roue d'entrainement, une roue d'appui au travail ou une roue d'appui au transport.

5. Procédé d'étalonnage selon l'une des revendications 2 à 4, dans lequel un capteur (14) d'une position de l'organe de référence (10) par rapport à un bâti (6) de la machine est un capteur d'angle et/ou la variable de position est un angle (A).

6. Procédé d'étalonnage selon l'une des revendications 2 à 5, dans lequel un capteur (14) d'une position de l'organe de référence (10) par rapport à un bâti (6) de la machine est un capteur d'élongation et/ou la variable de position est une longueur (L) susceptible d'évoluer en fonction de la position de l'organe de référence (10).

7. Procédé d'étalonnage selon la revendication 1, dans lequel la machine agricole comporte un organe de télémesure (30), la surface de référence étant le sol (5).

8. Procédé d'étalonnage selon la revendication précédente, l'organe de télémesure (30) étant un capteur optique tel qu'un organe de mesure par laser, ou un organe de mesure par ultrason.

9. Procédé d'étalonnage selon la revendication 1, dans lequel la machine agricole comporte un organe de mesure par contact (40), la surface de référence (45) appartenant à l'organe de mesure par contact (40).

10. Procédé d'étalonnage selon l'une des revendications 7 à 9, la variable de position étant une hauteur (H), le procédé comportant une étape de mesure de la hauteur (H) au moyen de l'organe de télémesure (30) ou de l'organe de mesure par contact (40).

11. Procédé d'étalonnage selon l'une des revendications précédentes, comportant une étape d'estimation et/ou d'affichage de la profondeur maximale atteignable au travail, et/ou une étape d'estimation et/ou d'affichage de la durée de vie restante de l'outil d'usure.

12. Procédé d'étalonnage selon l'une des revendications 1 à 11, l'outil d'usure (20 ; 120) étant un outil rotatif travaillant autour d'un axe vertical (22), de préférence au moins une lame (21).

13. Procédé d'étalonnage selon l'une des revendications 1 à 11, l'outil d'usure (20 ; 120) étant un outil rotatif travaillant autour d'un axe transversal à un axe vertical, de préférence un disque ouvreur.

14. Procédé d'étalonnage selon l'une des revendications précédentes, la courbe de référence f1 étant une courbe préenregistrée de la hauteur de l'outil d'usure dans un état neuf ou un état usé antérieur, en fonction de la variable de position.

15. Procédé de réglage en hauteur d'un outil d'usure comportant une étape préliminaire d'étalonnage conforme au procédé d'étalonnage selon l'une des revendications précédentes, pouvant ensuite comporter les étapes de :
- saisie d'une profondeur de travail (Pn) souhaitée ;
- détermination de la position souhaitée (An) de l'organe de référence (10) correspondant à la profondeur (Pn) d'après la courbe de correspondance f2 ;
- changement de hauteur de l'outil d'usure jusqu'à ce que la position souhaitée (An) de l'organe de référence (10) soit atteinte.

16. Programme d'ordinateur comportant des instructions pour la mise en oeuvre des étapes du procédé d'étalonnage en hauteur d'un outil d'usure (20 ; 120) de machine agricole selon l'une des revendications 1 à 14 lorsque lesdites instructions sont exécutées sur ladite machine agricole.

17. Machine agricole comportant un outil d'usure (20 ; 120), un organe de référence (10) et une unité de contrôle (9) configurée pour la mise en oeuvre du procédé d'étalonnage selon l'une des revendications 1 à 14.

## Patentansprüche

1. Höhenkalibrierungsverfahren eines Verschleißwerkzeugs (20; 120) einer landwirtschaftlichen Maschine, wobei die landwirtschaftliche Maschine das Verschleißwerkzeug (20; 120) umfasst, wobei das Verfahren folgende Schritte umfasst:
- In-Kontakt-Bringen des Verschleißwerkzeugs (20; 120) mit einer Bezugsfläche (5; 45);
- Messen des Werts (A2; A4) einer Stellungsvariablen in Verbindung mit der Positionierung des Verschleißwerkzeugs (Schritt 210), wenn das Verschleißwerkzeug (20; 120) mit der Bezugsfläche (5; 45) in Kontakt ist;
- Bestimmen einer theoretischen vertikalen Positionierungskomponente (P2; P4) des Verschleißwerkzeugs (20; 120) in Abhängigkeit des gemessenen Werts der Stellungsvariablen (A2; A4), gemäß einer Bezugskurve (fl), welche die vertikale Stellung des Werkzeugs (20) in Abhängigkeit des gemessenen Werts der Stellungsvariablen ergibt;
- Bestimmen einer Korrelationskurve (f2) zwischen einer vertikalen Positionierungskomponente (P(A)) des Verschleißwerkzeugs (20; 120) und der Stellungsvariablen (A; L; H) in Verbindung mit der Positionierung des Verschleißwerkzeugs (20; 120), durch Verschiebung der Bezugskurve (f1) um einen Wert (ΔP) gleich der zuvor bestimmten theoretischen vertikalen Komponente (P2; P4) (Schritt 240).

2. Verfahren nach dem vorhergehenden Anspruch, wobei die landwirtschaftliche Maschine ein Bezugselement (10) umfasst, das dazu bestimmt ist, mit der Bezugsfläche (5) in Kontakt zu kommen, wobei die Bezugsfläche der Boden (5) ist.

3. Kalibrierungsverfahren nach einem der vorhergehenden Ansprüchemit einem Schritt zum Abstellen des Bezugselements (10) auf die Bezugsfläche (5).

4. Kalibrierungsverfahren nach einem der Ansprüche 2 und 3, wobei das Bezugselement eine Bodenbearbeitungswalze (10), ein Antriebsrad, ein Stützrad für die Arbeit oder ein Stützrad für den Transport umfasst.

5. Kalibrierungsverfahren nach einem der Ansprüche 2 bis 4, wobei ein Sensor (14) für eine Position des Bezugselements (10) in Bezug auf einen Rahmen (6) der Maschine ein Winkelsensor ist und/oder die Stellungsvariable ein Winkel (A) ist.

6. Kalibrierungsverfahren nach einem der Ansprüche 2 bis 5, wobei ein Sensor (14) für eine Position des Bezugselements (10) in Bezug auf einen Rahmen (6) der Maschine ein Dehnungssensor ist und/oder die Stellungsvariable eine Länge (L) ist, die imstande ist, sich in Abhängigkeit der Stellung des Bezugselements (10) zu verändern.

7. Kalibrierungsverfahren nach Anspruch 1, wobei die landwirtschaftliche Maschine ein Telemetriegerät (30) umfasst, wobei die Bezugsfläche der Boden (5) ist.

8. Kalibrierungsverfahren nach dem vorhergehenden Anspruch, wobei das Telemetriegerät (30) ein optischer Sensor ist, wie etwa ein Lasermesselement, oder ein Ultraschallmesselement.

9. Kalibrierungsverfahren nach Anspruch 1, wobei die landwirtschaftliche Maschine ein Kontaktmesselement (40) umfasst, wobei die Bezugsfläche (45) zum Kontaktmesselement (40) gehört.

10. Kalibrierungsverfahren nach einem der Ansprüche 7 bis 9, wobei die Stellungsvariable eine Höhe (H) ist, wobei das Verfahren einen Schritt zur Messung der Höhe (H) mittels des Telemetriegeräts (30) oder des Kontaktmesselements (40) umfasst.

11. Kalibrierungsverfahren nach einem der vorhergehenden Ansprüche mit einem Schritt zur Schätzung und/oder zur Anzeige der maximalen erreichbaren Tiefe bei der Arbeit und/oder einem Schritt zur Schätzung und/oder zur Anzeige der verbleibenden Lebensdauer des Verschleißwerkzeugs.

12. Kalibrierungsverfahren nach einem der Ansprüche 1 bis 11, wobei das Verschleißwerkzeug (20; 120) ein Drehwerkzeug ist, das um eine Vertikalachse (22) arbeitet, vorzugsweise mindestens ein Messer (21).

13. Kalibrierungsverfahren nach einem der Ansprüche 1 bis 11, wobei das Verschleißwerkzeug (20; 120) ein Drehwerkzeug ist, das um eine Achse quer zu einer Vertikalachse arbeitet, vorzugsweise eine Furchenöffnungsscheibe.

14. Kalibrierungsverfahren nach einem der vorhergehenden Ansprüche, wobei die Bezugskurve f1 eine voreingespeicherte Kurve der Höhe des Verschleißwerkzeugs in einem Neuzustand oder einem vorhergehenden Verschleißzustand ist, in Abhängigkeit der Stellungsvariablen.

15. Höheneinstellungsverfahren eines Verschleißwerkzeugs mit einem Vorkalibrierungsschritt gemäß dem Kalibrierungsverfahren nach einem der vorhergehenden Ansprüche, das anschließend folgende Schritte umfassen kann:
- Eingeben einer gewünschten Arbeitstiefe (Pn);
- Bestimmen der gewünschten Stellung (An) des Bezugselements (10) entsprechend der Tiefe (Pn) gemäß der Korrelationskurve f2;
- Ändern der Höhe des Verschleißwerkzeugs, bis die gewünschte Stellung (An) des Bezugselements (10) erreicht ist.

16. Computerprogrammmit Anweisungen für die Anwendung der Schritte des Höhenkalibrierungsverfahrens eines Verschleißwerkzeugs (20; 120) einer landwirtschaftlichen Maschine nach einem der Ansprüche 1 bis 14, wenn die Anweisungen auf der landwirtschaftlichen Maschine ausgeführt werden.

17. Landwirtschaftliche Maschine mit einem Verschleißwerkzeug (20; 120), einem Bezugselement (10) und einer Steuereinheit (9), die für die Anwendung des Kalibrierungsverfahrens nach einem der Ansprüche 1 bis 14 ausgestaltet ist.

## Claims

1. Method for calibrating the height of an agricultural machine wear tool (20; 120), the agricultural machine including the said wear tool (20; 120), the method including the following steps:
- placement of the wear tool (20; 120) in contact with a reference area (5; 45);
- measurement of the value (A2; A4) of a position variable linked to the positioning of the wear tool (step 210) when the wear tool (20; 120) is in contact with the reference area (5; 45);
- determination of a theoretical vertical positioning component (P2; P4) of the wear tool (20; 120) according to the measured value of the position variable (A2; A4), based on a reference curve (f1) giving the vertical position of the tool (20) according to the measured value of the position variable;
- determination of a matching curve (f2) between a vertical positioning component (P(A)) of the wear tool (20; 120) and the position variable (A; L; H) linked to the positioning of the wear tool (20; 120), by shifting the reference curve (f1) by a value (ΔP) equal to the theoretical vertical component previously determined (P2; P4) (step 240).

2. Method according to the previous claim, in which the agricultural machine includes a reference element (10) designed to come into contact with the reference area (5), the reference area being the ground (5).

3. Calibration method according to one of the previous claims including a step in which the reference element (10) is placed on the reference area (5).

4. Calibration method according to one of the claims 2 and 3, the reference element including a soil-working roller (10), a drive wheel, a support wheel for work or a support wheel for transport.

5. Calibration method according to one of the claims 2 to 4, in which a sensor (14) of a position of the reference element (10) relative to a frame (6) of the machine is an angle sensor and/or the position variable is an angle (A).

6. Calibration method according to one of the claims 2 to 5, in which a sensor (14) of a position of the reference element (10) relative to a frame (6) of the machine is a stretching sensor and/or the position variable is a length (L) which may change according to the position of the reference element (10).

7. Calibration method according to claim 1, in which the agricultural machine includes a telemetering element (30), the reference area being the ground (5).

8. Calibration method according to the previous claim, the telemetering element (30) being an optical sensor such as a laser measuring element or an ultrasonic measuring element.

9. Calibration method according to claim 1, in which the agricultural machine includes a contact measuring element (40), the reference area (45) belonging to the contact measuring element (40).

10. Calibration method according to one of the claims 7 to 9, the position variable being a height (H), the method including a step of measuring the height (H) using the telemetering element (30) or the contact measuring element (40).

11. Calibration method according to one of the previous claims, including a step of estimating and/or displaying the maximum depth achievable during work, and/or a step of estimating and/or displaying the remaining lifespan of the wear tool.

12. Calibration method according to one of the claims 1 to 11, the wear tool (20; 120) being a rotary tool working around a vertical axis (22), preferably at least one blade (21).

13. Calibration method according to one of the claims 1 to 11, the wear tool (20; 120) being a rotary tool working around an axis transverse to a vertical axis, preferably a furrow opening disc.

14. Calibration method according to one of the previous claims, the reference curve f1 being a pre-saved curve of the height of the wear tool in a new state or in a previous worn state, according to the position variable.

15. Method to adjust the height of a wear tool including a preliminary calibration step compliant with the calibration method according to one of the previous claims, which may then include the following steps:
- entry of a desired work depth (Pn);
- determination of the desired position (An) of the reference element (10) corresponding to the depth (Pn) according to the matching curve f2;
- change of the height of the wear tool until the desired position (An) of the reference element (10) is achieved.

16. Computer software including instructions for implementing the steps of the method for calibrating the height of an agricultural machine wear tool (20; 120) according to one of the claims 1 to 14 when the said instructions are executed on the said agricultural machine.

17. Agricultural machine including a wear tool (20; 120), a reference element (10) and a control unit (9) configured for the implementation of the calibration method according to one of the claims 1 to 14.
